# EUROPEAN PATENT SPECIFICATION

(11) **EP 1 089 511 B1**
(45) Date of publication and mention of the grant of the patent: **15.11.2006**
(21) Application number: 00120273.8
(22) Date of filing: 28.09.2000
(51) Int. Cl.: H04L 27/26, H04L 12/28, H04L 5/14

(54) **Multi-client ADSL modem**
Mehrklient ADSL Modem
Modem multi-client du type ADSL

(30) Priority: 28.09.1999 US 156484 P
(43) Date of publication of application: 04.04.2001
(73) Proprietor: TEXAS INSTRUMENTS INCORPORATED, Dallas, Texas 75251 (US)
(72) Inventor: Chen, Yaqi, Smyrna, GA 30080 (US); Wu, Song, Plano, TX 75024 (US); Ibrahim, Yaser M., Richardson, TX 75082 (US)
(74) Representative: Degwert, Hartmut

(56) References cited:
- WO-A-98/20649

## Description

### FIELD OF THE INVENTION

The present invention is generally related to communication networks, and more specifically to networks adapted to communicate over standard residential 2-wire phone lines including those adapted to support ADSL communications.

### BACKGROUND OF THE INVENTION

Asymmetrical Digital Subscriber Lines (ADSL) is an ANSI standard identified as TI.413 issued in 1995 which presents the electrical characteristics of the ADSL signal as it should appear at a network interface. Generally, ADSL is a high-speed communication technology that allows one client modem, such as that at a remote terminal (RT), to be connected to only one central office (CO) modem through one twisted pair telephone line forming a loop. Typically, discrete multi-tone (DMT) modulation is the chosen line code technique standard in a typical ADSL system. Upstream communications, such as from RT to CO, and downstream communications, such as CO to RT, are divided from one another using frequency division multiplexing (FDM) or using echo canceling, allowing the frequency band for upstream communications to be shared with downstream communications thereby increasing the overall data rate over the loop.

Disadvantageously, the ADSL standard allows only one pair of modems (CO and RT) to communicate over a loop at the same time. The CO modem may send a downstream signal while simultaneously receiving an upstream signal from the RT, frame by frame. Similarly, the RT modem may receive the downstream communication from the CO modem and simultaneously send upstream communication signals to the CO modem.

Since the standardization of ADSL communications, there have been introduced varied implementations and customized uses of the ADSL technology, such as disclosed in commonly assigned US Patent 5,479,447 entitled "Method and Apparatus for Adaptive, Variable Bandwidth, High-Speed Data Transmission of a Multi-Carrier Signal over Digital Subscriber Lines, the teachings of this patent included herein by reference.

As homes and offices become more networked, there are typically multiple communication terminals and devices in the residential house or office, and local networks are likely installed to share resources, such as internet access, printers, and so on. Home networks are particularly unique in that cost and wiring issues are key considerations. The IEEE 1394 standard has been recently developed which provides for data speeds up to hundreds Mbps. However, the IEEE 1394 standard also requires special cabling for connection, and is not adapted to operate over the common twisted pair telephone lines wired typically throughout a home, for example. A new consortium of home networking, known as Home Phoneline Networking Alliance (HomePNA), was formed and headed by Tut Systems and is supported by top computer and communication industry leaders including its founding members 3COM, AMD, AT&T, Compaq, HP, IBM, Intel, Lucent, and Rockwell, whereby Microsoft is one of the major stock holders of Tut Systems. HomePNA is able to connect PCs and peripherals within a household through a single pair phone line shared not only with the telephone sets, but also with xDSL services provided by modems exchanging information over the conventional twisted pair phone lines. HomePNA runs at the frequency range from 5.5 MHz to 9.5 MHz, while the Plain Old Telephone Service (POTS) operates in the frequency range under 4 KHz, and the xDSL service operates at the frequency range from 275 KHz to 1 MHz. The current available HomePNA technology can provide 1 Mbps Ethernet local networking, and may reach 10 Mbps in the near future.

WO 98/20649 A provides a network adapter for use with networked computers e.g. in a residential house. The network adapter combines the Ethernet bus access protocol with a digital subscriber line-based physical layer driver. Each computer system in the network must comprise a network adapter. Access to the network is then administrated by the Ethernet protocol, while data transmission is effectuated by using DSL techniques. The improved performance of the network adapter allows utilization of standard telephone lines as e.g. twisted pairs or of power lines as transmission medias.

### SUMMARY OF THE INVENTION

The present invention provides a communication network with the features of claim 1 and a modem adapted for use at a central office with the features of claim 6.

The present invention achieves technical advantages as a Multi-Client ADSL Modem and network that can be configured as a home network by providing multiple ADSL modems installed in different communication terminals which may be connected to and coordinated by a multi-client modem at a central office serving as a network hub. This architecture allows connected PCs, for instance, to share internet access, printers, file storage, and so forth, but without extra hardware cost like Ethernet cards or upgraded cables. Each connection terminal, such as a PC, is able to communicate with the other as a home network by communicating over a single pair of twisted phone line conductors with the central office (10) modem serving as a network hub. The present invention provides three sharing schemes allowing the multi-client ADSL modems to communicate with the central office, and to communicate with each other through the standard phone line connection. The sharing schemes include frame multiplexing, tone sharing, and code division.

In the frame multiplexing architecture, all connected multi-client ADSL modems receive the same downstream signal from the CO modem. Each multi-client ADSL modem takes the data package itself asked. Each multi-client ADSL modem is allowed in schedule to send one or more frames to the CO modem, while the other multi-client ADSL modems keep quiet. This CO modem can return the frame data from one multi-client ADSL modem to another multi-client ADSL modem through downstream channels. One of the multi-client ADSL modems is first connected to the CO modem, and is then configured as the master multi-client ADSL modem. This master multi-client ADSL modem maintains the superframe transmission if other multi-client ADSL modems join in, one after another.

Using the tone sharing technique, all connected multi-client ADSL modems receive the same downstream signals from the CO modem. Each multi-client ADSL modem takes the data package itself asked, whereby each multi-client ADSL modem uses a number of upstream tones to the CO modem while other multi-client ADSL modems use different tones, and which tones can be sent simultaneously. The CO modem can return the data from one multi-client ADSL modem to another multi-client ADSL modem through downstream channels. One of the multi-client ADSL modems is first connected to the CO modem, and is then configured as the master multi-client ADSL modem. The master multi-client ADSL modem will maintain the superframe transmission if other multi-client ADSL modems join in, one after another.

Using the code division architecture, all connected multi-client ADSL modems receive the same downstream signal from the CO modem. Each multi-client ADSL modem takes the data package itself asked. Each multi-client ADSL modem is set up to code its data with a special signed key word, such as is used in CDMA wireless applications. The ADSL modem then modulates the coded data in all frames and in all tones. The CO modem can decode the data and re-send the data back to other multi-client ADSL modems through downstream channels.

### BRIEF DESCRIPTION OF THE DRAWINGS

Figure 1 is a block diagram configuration of two multi-client ADSL modems located within a single residence and each communicating over a single twisted pair phone line to a remote single CO modem for communication with one another, or for communication between either RT modem and the CO modems;
Figure 2 is a block diagram of a multi-client ADSL system, whereby multi-client ADSL modems each communicate with the central office (CO) modem through one loop carrier comprising a single pair of twisted conductors;
Figure 3A and Figure 3B are graphs depicting how the multi-client modems share one upstream channel by frame multiplexing and tone division; and
Figure 4 illustrates a method of initializing the multi-client ADSL modems with one becoming the master modem maintaining the superframe.

### DESCRIPTION OF THE PREFERRED EMBODIMENT

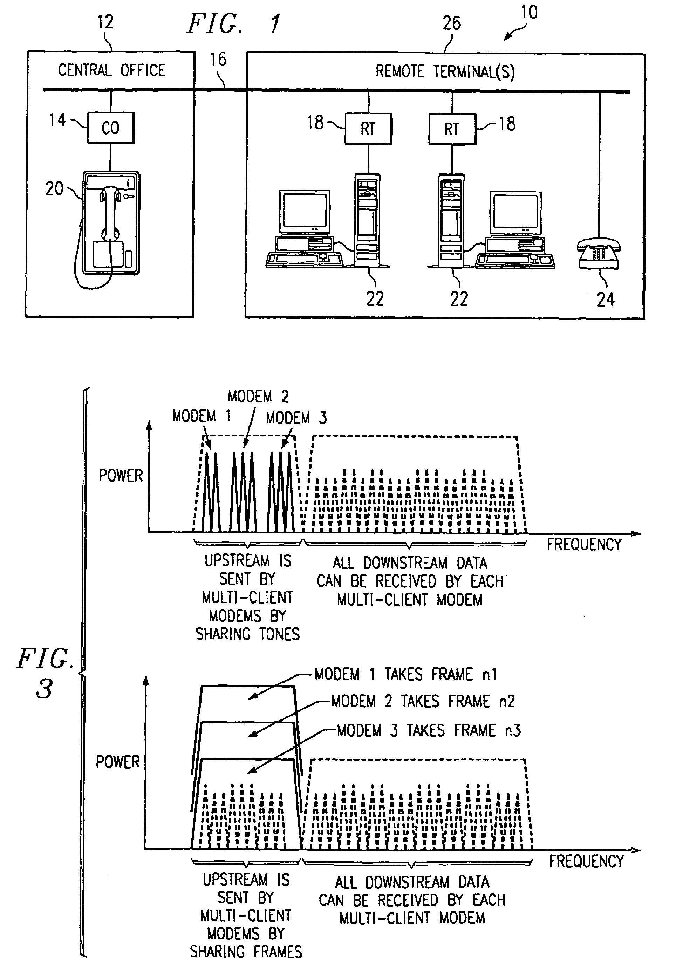

Referring now to Figure 1, there is shown at 10 a multi-client ADSL network including a central office (CO) 12 having a CO modem 14 connected via a single twisted pair loop of telephone conductors 16 to remote terminal (RT) modems 18. The CO modem 14 is adapted to serve one or more respective communication terminals 20, which may be a landline phone, computer, or wireless communication device. The respective RT modems 18 are adapted to serve respective communication terminals 22 such as PC, wireline phone, or wireless communication terminals such as a personal digital assistant (PDA). Also shown is a standard telephone 24 also connected to and communicating over the single loop carrier 16 for providing voice communications with remote terminals served by the central office 12. In this multi-client modem configuration 10, the RT terminals 22, which may be PCs, can not only access internet communications through the network via resources at the CO 12, but can also communicate at a common site 26 with each other as a local home network or an office network.

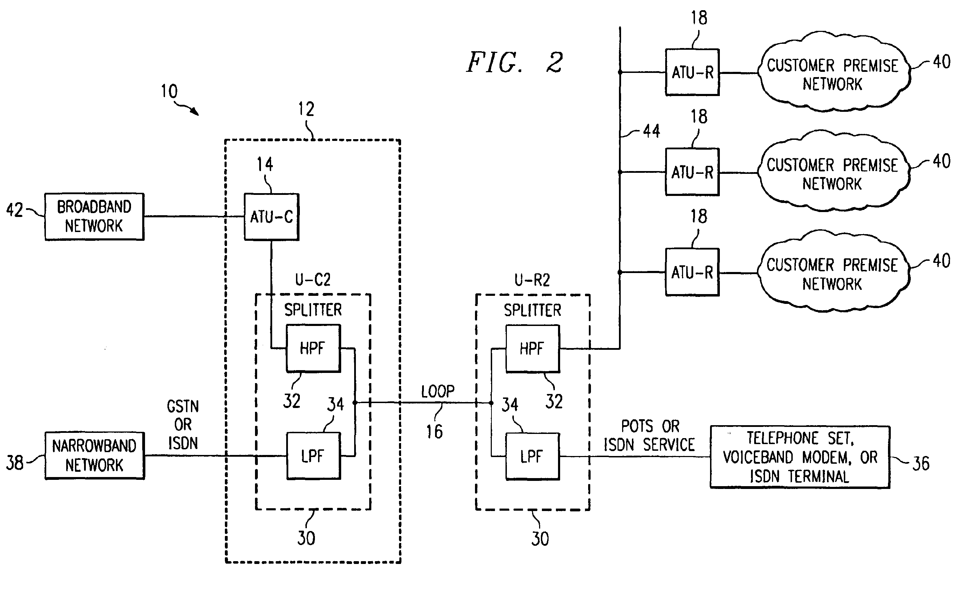

Referring to Figure 2, there is depicted in more detail the network 10 of Figure 1 which provides regular ADSL communication service between the residential client modems 18 depicted as ATU-R, via the single loop carrier 16 and the CO modem 14 identified as ATU-C. Both the CO modem 14 and the RT modems 18 are equipped with frequency splitters and network resources 30, each splitter comprising a high pass filter 32 and a low pass filter 34. The high pass filter 32 and the low pass filter 34 each separate the ADSL frequency band communications from the voice frequency band communications. Thus, a telephone set, voice band modem, or ISDN terminal, such as shown at 36, can communicate with a narrowband network 38 via a single loop carrier 16, as shown. Likewise, the high pass filters 32 facilitate communication between customer premise networks 40 via loop carrier 16 with a broadband network 42.

Depicted at 44 is the common single twisted pair of telephone line extending between the remote terminal modems 18, such as in a daisy chain arrangement from outlet to outlet within a home. Each of these RT modems 18 is connected to and communicates through the respective high pass filter 32 of the splitter at the home. The ADSL service communicating between customer premise network 40 and broadband network 42 provides broadband network service to each home communication device in the home network. The voice band communications provide regular Plain Old Telephone Service (POTS) or ISDN telephony service.

The multi-client ADSL system 10 allows each of the multiple client modems 18 to operate on the same single pair of twisted conductor phone line routed through a home or office to communicate with and through a single CO modem 14, simultaneously. No additional equipment or special wiring is needed. Rather, the internal phone line throughout the home is used. With the multi-client ADSL system 10, the remote communication terminals, which are depicted as a customer premise network 40 in Figure 2, can be locally networked without additional hardware cards, or special wiring such as CAT-5 wiring. The PCs 22 at the residential site 26 can access the internet through the network 10 via the resources at the CO 12, but can also communicate with each other as a local office network or a home network.

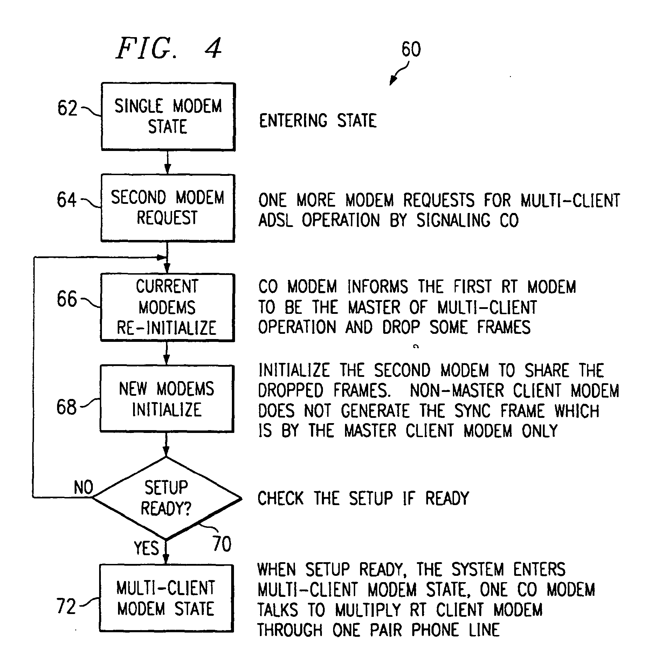

Referring now to Figure 3A and Figure 3B, the multi-client modems 18 serving the respective remote terminals 22 can be adapted to share the upstream communications by sending data from the RT modem 18 to the CO modem 14 using frequency division (sharing tones), by time division (sharing frames), or even applying code division like signatures similar to CDMA in wireless communications.

In frequency division, as shown in Figure 3A, each multi-client modem 18 is assigned unique tones for use on upstream channels. In time division, as shown in Figure 3B, each multi-client modem 18 utilizes some frames on the upstream channels while the other modems are keeping quiet. Alternatively, code division allows the multi-client modems 18 to send data on upstream channels simultaneously to the CO modem 14, covering all frames and all tones.

On downstream channels, each multi-client modem 18 receives all the data packets from CO modem 14, but is also adapted to ascertain the data packets that it has requested. A data packet has certain information bits that shows its destination, and which information bits such as header bits are used by each RT modem 18 to identify and decipher the associated data therewith to determine if the data is to be interpreted. One of the multi-client ADSL modems 18 is first connected to the CO modem 14 and is responsively configured by the CO modem 14 as the master multi-client ADSL modem 18. This identified master multi-client ADSL modem 18 then maintains the superframe transmission if other multi-client ADSL modems 18 join in, one after another. This superframe is not shared by other multi-client ADSL modems.

Now referring to Figure 4, there is illustrated at 60 a methodology by which the client modems 18 are initialized for use in the multi-client modem network 10, as shown in Figure 1 and Figure 2. The multi-client ADSL system 10 is compliant to the single client ADSL system when only one client modem 18 is connected to the loop carrier 16 comprising a single phone line.

The system 10 first enters into the single modem state at step 62, similar to a normal ADSL system. Next, at step 64, if there is a second modem 18 initialized and turned on, this new added modem 18 requests for connection by signaling the CO modem 14 with a special handshaking message exchange. The CO modem 14 responds to this request by informing the first modem 18 to skip transmitting some frames in a time division implementation, or some tones in a frequency division implementation. The CO modem 14 then provides for the first modem 18 to be re-trained as necessary at step 66. The CO modem 14 informs the first RT modem 18 to be the master modem of the multi-client operation and drops some frames.

At step 68, after re-setup of the first modem 18, the CO modem 14 will acknowledge and start a training process for the second modem whereby the second modem 18 shares the dropped frames. The non-master client modem 18 does not generate the sync frame, which is generated by the master client modem 18 only.

At step 70, if the set-up is ready, the system 10 enters the multi-client modem state, whereby one CO modem 14 communicates with the multiple RT client modems 18 through the single pair of phone line 16 known as loop carrier. If at step 70 the set-up of the system is not ready, the system returns back to step 66. When two or more client modems 18 are joining the single pair phone line 16, the CO modem 14 can re-train the first two modems 14, release more frames or tones for the newly requesting modem 18, then set up the other.

In summary, the present invention provides a local home or office network by which multiple remote terminals at a residential location or office can communicate with one another over a single common pair phone line, without requiring special equipment or additional wiring. The central office modem 14 operates as a network hub to route communications from one remote terminal to another while may all reside within a common location, providing ADSL service over a single pair of phone line. One remote terminal may communicate with the other, one at a time, or simultaneously depending on the architecture used. The regular telephone service communicating voiceband signals is not affected. Splitters are used to separate the high frequency signals of ADSL from the low frequency signals for voice communications. The present invention utilizes ADSL communications that conform to ADSL standards.

## Claims

1. A communication network, comprising:
a central office (12);
a first terminal (22) having a first modem (18) connected to said central office (12) via a single twisted pair loop of conductors (16); and
a second terminal (22) having a second modem (18) also connected to said central office (12) via said single twisted pair loop of conductors (16),
wherein said first and second terminals (22) are adapted to communicate with said central office (12) and each other with signals compatible with ADSL standards, and
whereby said central office (12) is located remote from both said first and second terminal (22); **characterized in that** said central office (12) is adapted to permit and enable said first terminal (22) to communicate with said second terminal (22) via said central office (12).

2. The communication network as specified in Claim 1 wherein said first and second terminals (22) are locally proximate one another.

3. The communication network as specified in Claim 1 wherein said first terminal (22) and said second terminal (22) are adapted to simultaneously communicate over said single twisted pair loop of conductors (16) with said central office (12).

4. The communication network as specified in Claim 1 wherein each said first terminal (22) and said second terminal (22) are adapted to communicate over said single twisted pair loop of conductors (16) using a technique selected from the group consisting of: time division, frequency division, and code division.

5. The communication network as specified in Claim 1 wherein said first terminal (22) is a personal computer.

6. A modem (14) adapted for use at a central office (12), comprising:
a transceiver adapted to communicate information with a remote first terminal (22) over a single twisted pair loop of conductors (16) with signals compatible with ADSL standards, wherein said transceiver is further adapted to communicate with a second remote terminal (22) over said same single twisted pair loop of conductors (16) with signals compatible with ADSL standards, whereby said central office (12) is located remote from both said first and second terminal (22), **characterized in that** said modem (14) is adapted to permit and enable said first terminal (22) to communicate with said second terminal (22) with signals compatible with ADSL standards via said central office (12).

7. The modem (14) as specified in Claim 6 wherein said first and second terminals (22) are adapted to be co-located, said modem (14) being adapted to facilitate communications between each said terminal (22) over said single twisted pair loop of conductors (16).

8. The modem (14) as specified in Claim 7 wherein said modem (14) is adapted to simultaneously communicate with said first terminal (22) and said second terminal (22).

9. The modem (14) as specified in Claim 8 wherein said modem (14) facilitates said simultaneous communication using a technique selected from the group consisting of: time division, frequency division and code division.

## Patentansprüche

1. Kommunikationsnetz, mit:
einer zentralen Vermittlungsstelle (12);
einem ersten Endgerät (22), das ein erstes Modem (18) besitzt, das an die Vermittlungsstelle (12) über ein einziges verdrilltes Leiterschleifenpaar (16) angeschlossen ist; und
einem zweiten Endgerät (22), das ein zweites Modem (18) besitzt und an die Vermittlungsstelle (12) ebenfalls über ein einziges verdrilltes Leiterschleifenpaar (16) angeschlossen ist,
wobei das erste und das zweite Endgerät (22) so beschaffen sind, dass sie mit dem Vermittlungsstelle (12) und miteinander über Signale kommunizieren, die mit ADSL-Normen kompatibel sind, und
wobei die Vermittlungsstelle (12) entfernt von dem ersten und dem zweiten Endgerät (22) angeordnet ist; **dadurch gekennzeichnet, dass** die Vermittlungsstelle (12) so beschaffen ist, dass sie dem ersten Endgerät (22) erlaubt und es dazu in die Lage versetzt, mit dem zweiten Endgerät (22) über die Vermittlungsstelle (12) zu kommunizieren.

2. Kommunikationsnetz nach Anspruch 1, bei dem sich das erste und das zweite Endgerät (22) in gegenseitiger Nähe befinden.

3. Kommunikationsnetz nach Anspruch 1, bei dem das erste Endgerät (22) und das zweite Endgerät (22) so beschaffen sind, dass sie gleichzeitig über ein einziges verdrilltes Leiterschleifenpaar (16) mit der Vermittlungsstelle (12) kommunizieren.

4. Kommunikationsnetz nach Anspruch 1, bei dem sowohl das erste Endgerät (22) als auch das zweite Endgerät (22) so beschaffen ist, dass es über das einzige verdrillte Leiterschleifenpaar (16) unter Verwendung einer Technik, die aus der Gruppe ausgewählt ist, die aus Zeitmultiplex, Frequenzmultiplex und Codemultiplex besteht, kommuniziert.

5. Kommunikationsnetz nach Anspruch 1, bei dem das erste Endgerät (22) ein Computer ist.

6. Modem (14), das für eine Verwendung in einer Vermittlungsstelle (12) ausgelegt ist, mit:
einem Sender/Empfänger, der so beschaffen ist, dass er Informationen mit einem entfernten ersten Endgerät (22) über ein einziges verdrilltes Leiterschleifenpaar (16) unter Verwendung von Signalen austauscht, die mit ADSL-Normen kompatibel sind, wobei der Sender/Empfänger ferner so beschaffen ist, dass er mit einem zweiten entfernten Endgerät (22) über dasselbe einzelne verdrillte Leiterschleifenpaar (16) unter Verwendung von Signalen, die mit ADSL-Normen kompatibel sind, kommuniziert, wobei die Vermittlungsstelle (12) sowohl vom ersten als auch vom zweiten Endgerät (22) entfernt angeordnet ist, **dadurch gekennzeichnet, dass** das Modem (14) so beschaffen ist, dass es dem ersten Endgerät (22) ermöglicht und es in die Lage versetzt, mit dem zweiten Endgerät (22) unter Verwendung von Signalen, die mit ADSL-Normen kompatibel sind, über die Vermittlungsstelle (12) zu kommunizieren.

7. Modem (14) nach Anspruch 6, bei dem das erste und das zweite Endgerät (22) so beschaffen sind, dass sie in gegenseitiger Nähe angeordnet sind, wobei das Modem (14) so beschaffen ist, dass es die Kommunikation zwischen jedem Endgerät (22) über das einzelne verdrillte Leiterschleifenpaar (16) erleichtert.

8. Modem (14) nach Anspruch 7, wobei das Modem (14) so beschaffen ist, dass es gleichzeitig mit dem ersten Endgerät (22) und mit dem zweiten Endgerät (22) kommuniziert.

9. Modem (14) nach Anspruch 8, wobei das Modem (14) die gleichzeitige Kommunikation unter Verwendung einer Technik, die aus der Gruppe ausgewählt ist, die aus Zeitmultiplex, Frequenzmultiplex und Codemultiplex besteht, erleichtert.

## Revendications

1. Réseau de communication, comprenant :
un central téléphonique (12) ;
un premier terminal (22) ayant un premier modem (18) connecté audit central téléphonique (12) par l'intermédiaire d'une boucle de conducteurs à paire torsadée unique(16) ; et
un deuxième terminal (22) ayant un deuxième modem (18) également connecté audit central téléphonique (12) par l'intermédiaire de ladite boucle de conducteurs à paire torsadée unique (16),
dans lequel lesdits premier et deuxième terminaux (22) sont adaptés pour communiquer avec ledit central téléphonique (12) et l'un avec l'autre par des signaux compatibles avec les normes ADSL, et
par lequel ledit central téléphonique (12) est éloigné à la fois desdits premier et deuxième terminaux (22) ; **caractérisé en ce que** ledit central téléphonique (12) est adapté pour permettre audit premier terminal (22) de communiquer avec ledit deuxième terminal (22) par l'intermédiaire dudit central téléphonique.

2. Réseau de communication selon la revendication 1, **caractérisé en ce que** lesdits premier et deuxième terminaux (22) sont localisés à proximité l'un de l'autre.

3. Réseau de communication selon la revendication 1, **caractérisé en ce que** ledit premier terminal (22) et ledit deuxième terminal (22) sont adaptés pour communiquer simultanément sur ladite boucle de conducteurs à paire torsadée unique (16) avec ledit central téléphonique (12).

4. Réseau de communication selon la revendication 1, **caractérisé en ce que** chacun desdits premier (22) et deuxième (22) terminaux est adapté pour communiquer sur ladite boucle de conducteurs à une paire torsadée unique (16) en utilisant une technique choisie parmi le groupe se composant de : la répartition dans le temps, la répartition en fréquence, et la répartition en code.

5. Réseau de communication selon la revendication 1, **caractérisé en ce que** ledit terminal (22) est un ordinateur personnel.

6. Modem (14) adapté pour être utilisé au niveau d'un central téléphonique (12), comprenant:
un émetteur-récepteur adapté pour communiquer une information avec un premier terminal distant (22) sur une boucle de conducteurs à paire torsadée unique (16) par des signaux compatibles avec les normes ADSL, dans lequel ledit émetteur-récepteur est de plus adapté pour communiquer avec un deuxième terminal distant (22) sur ladite même boucle de conducteurs à paire torsadée unique (16) par des signaux compatibles avec des normes ADSL, par lequel ledit central téléphonique (12) est éloignée loin à la fois dudit premier et dudit deuxième terminal (22), **caractérisé en ce que** ledit modem (14) est adapté pour permettre audit premier terminal (22) de communiquer avec ledit deuxième terminal (22) par des signaux compatibles avec les normes ADSL par l'intermédiaire dudit central téléphonique (12).

7. Modem (14) selon la revendication 6, **caractérisé en ce que** lesdits premier et deuxième terminaux (22) sont adaptés pour être installés au même endroit, ledit modem (14) étant adapté pour faciliter des communications entre chacun desdits terminaux (22) sur ladite boucle adapté de conducteurs à paire torsadée unique (16).

8. Modem (14) selon la revendication 7, **caractérisé en ce que** ledit modem (14) est adapté pour communiquer simultanément avec ledit premier terminal (22) et ledit deuxième terminal (22).

9. Modem (14) selon la revendication 8, **caractérisé en ce que** ledit modem (14) facilite ladite communication simultanée en utilisant une technique choisie parmi le groupe se composant de : la répartition dans le temps, la répartition en fréquence, et la répartition en code.
